# EUROPÄISCHE PATENTSCHRIFT

(11) **EP 0 823 867 B1**
(45) Veröffentlichungstag und Bekanntmachung des Hinweises auf die Patenterteilung: **24.11.1999**
(21) Anmeldenummer: 96914996.2
(22) Anmeldetag: 26.04.1996
(51) Int. Cl.: B21C 37/08, B21C 37/09

(54) **VERFAHREN ZUM UMMANTELN EINES KUNSTSTOFFROHRES MIT EINER METALLUMMANTELUNG**
PROCESS FOR SHEATHING A PLASTIC PIPE WITH A METAL SHEATH
PROCEDE POUR MUNIR UN TUYAU EN PLASTIQUE D'UNE GAINE METALLIQUE

(30) Priorität: 29.04.1995 DE 19515853
(43) Veröffentlichungstag der Anmeldung: 18.02.1998
(73) Patentinhaber: Hewing GmbH, D-48607 Ochtrup (DE)
(72) Erfinder: FRIEDRICH, Emil, D-69469 Weinheim (DE)
(74) Vertreter: Hilleringmann, Jochen, Dipl.-Ing.
(86) Internationale Anmeldenummer: EP9601761
(87) Internationale Veröffentlichungsnummer: WO9634708

(56) Entgegenhaltungen:
- EP-A- 0 127 127
- EP-A- 0 639 411
- DE-A- 3 630 625
- US-A- 4 593 550
- US-A- 4 827 099
- PATENT ABSTRACTS OF JAPAN vol. 007, no. 104 (M-212), 6.Mai 1983 & JP,A,58 025893 (SUMITOMO KEIKINZOKU KOGYO KK), 16.Februar 1983,

## Beschreibung

Die Erfindung betrifft ein Verfahren zum Ummanteln eines Kunststoffrohres mit einer Metallummantelung, bei dem um ein Kunststoffrohr herum ein Metallband gelegt wird, das zu einer Seite des Metallbandes abgewinkelte Längsränder aufweist, die bei um das Kunststoffrohr herumgelegtem Metallband im wesentlichen parallel zur Längsachse des Kunststoffrohres verlaufend aneinanderliegen und miteinander verschweißt werden.

Zur Herstellung von Kunststoff-Metall-Verbundrohren ist es unter anderem erforderlich, um ein Kunststoff-Innenrohr ein Metallband kraftschlüssig zu umformen. Nach dem Ummanteln des Kunststoff-Innenrohres mit dem Metallband wird dann noch von außen ein weiteres Kunststoffrohr aufextrudiert. Ein derartiges Verbundrohr vereint die Vorteile eines reinen Kunststoffrohres und eines Metallrohres, indem es die Flexibilität eines Kunststoffrohres aufweist und durch die Metallzwischenlage diffusionssperrend wie ein Metallrohr ist.

Verfahren zur Herstellung von Kunststoff-Metall-Verbundrohren sind beispielsweise aus DE 20 45 973 A1, DE 29 23 544 C2, DE 32 25 869 A1, DE 43 10 272 A1 und EP 0 639 411 A1 bekannt.

Ein Problem bei der Ummantelung eines Kunststoffrohres mit einem Metallband besteht in der Verbindung der Metallband-Längsränder nach dem Umlegen um das Kunststoffrohr. Die Längsränder des Metallbandes werden hierzu zumeist miteinander verschweißt. Dabei besteht das Problem darin, daß durch das Verschweißen die Gefahr der Beschädigung des Kunststoffrohres besteht.

Im Stand der Technik ist es bekannt, daß sich die Längsränder des sich um das Kunststoffrohr herumgelegten Metallbandes überlappen und miteinander verschweißt werden. Aus der oben genannten DE 29 23 544 C2 ist es bekannt, die Längsränder des Metallbandes auf Stoß anliegend miteinander zu verschweißen. Dies setzt eine recht genaue Prozeßsteuerung und Führung des Metallbandes sowie der aneinanderliegenden Metallband-Längsränder voraus.

In den ebenfalls oben genannten DE 20 45 973 A1 und DE 32 25 869 A1 wird vorgeschlagen, zur Herstellung eines Metallrohres aus einem Metallband die Längsränder des Metallbandes zu einer Seite desselben abzuwinkeln, um dann das derart geformte Metallband zu einem Rohr zu formen, wobei die abgewinkelten Längsränder aneinanderliegen. In diesem Zustand werden die Längsränder an ihren freien Enden miteinander verschweißt. Dabei erstreckt sich die Schweißverbindung ausschließlich im Bereich der freien Längsränderenden; im übrigen Bereich der Längsränder, insbesondere an deren Übergängen zum dazwischenliegenden Mittelabschnitt des Metallbandes, sind diese also nicht miteinander verbunden. Die Schweißnaht erstreckt sich also nicht über die gesamte Höhe der Längsränder. Der nach dem Verschweißen noch verbleibende aus den Längsrändern bestehende radiale Überstand wird umgelegt. In diesem Bereich weist das Metallrohr - wie übrigens auch bei einem mit überlappten Längsrändern zu einem Rohr geformten Metallband - eine Verdickung und damit einen unregelmäßigen Querschnitt auf, was nicht wünschenswert ist.

Auch bei dem aus DE 43 10 272 A1 bzw. EP 0 639 411 A1 bekannten Verfahren wird das um das Kunststoff-Innenrohr gelegte Metallband an seinen nach außen hochstehenden Bandkanten miteinander verschweißt, wobei das Volumen der abgewinkelten Längsränder und die Schweißenergie derart gewählt werden, daß das Längsnaht-verschweißte Metallband nach dem Verschweißen im Bereich der Längsnaht eine im wesentlichen in der Außenumfangsfläche der Metallummantelung liegende Außenfläche aufweist. Die Herstellung der abgewinkelten Längsränder des Metallbandes ist insbesondere dann problematisch, wenn die Breite dieser Längsränder klein ist.

Der Erfindung liegt die Aufgabe zugrunde, ein Verfahren zum Ummanteln eines Kunststoffrohres mit einem abgewinkelte Längsränder aufweisenden Metallband zu schaffen, bei dem als Vorstufe der Ummantelung das Metallband mit relativ schmalen abgewinkelten Längsrändern versehen wird.

Zur Lösung dieser Aufgabe wird mit der Erfindung ein Verfahren zum Ummanteln eines Kunststoffrohres mit einer Metallummantelung vorgeschlagen, das die im Anspruch 1 aufgeführten Verfahrensschritte aufweist; die Unteransprüche betreffen vorteilhafte Ausgestaltungen der Erfindung.

Erfindungsgemäß erfolgt die Herstellung der Längsränder schrittweise, indem dem Metallband zunächst abgestufte Längsseiten verliehen werden. Diese Abstufung ist in der Weise vorgesehen, daß das Metallband im Querschnitt zwischen seinem Mittelabschnitt und den Längsseiten bei Betrachtung des Querschnitts z-förmig ausgebildet ist. An den Mittelabschnitt des Metallbandes schließt sich dann zu jeder Seite des Mittelabschnitts hin ein winklig abstehender Winkelabschnitt an, von dem aus wiederum sich ein Randabschnitt erstreckt, der im wesentlichen parallel zum Mittelabschnitt des Metallbandes verläuft. Im Querschnitt betrachtet weist das Metallband also einen erhabenen bzw. je nach Orientierung des Metallbandes einen abgesenkten vertieften Mittelabschnitt auf, der beidseitig von abstehenden L-förmigen Flanschen begrenzt ist, die die Winkelabschnitte aufweisen, an welche sich einander abweisende parallel zum Mittelabschnitt verlaufende Randabschnitte anschließen. Die auf diese Weise herstellbaren Winkelabschnitte können eine extrem kurze Länge aufweisen, d.h. der Höhenversatz zwischen dem Mittelabschnitt und den Randabschnitten des Metallbandes kann extrem klein gewählt werden. Durch einen sich an diesen Verformungsvorgang anschließenden Säumungsvorgang in einer Besäumungsstation werden die Randabschnitte von den Winkelabschnitten abgetrennt. Damit liegt das geformte Metallband vor, das jetzt noch aus dem Mittelabschnitt und den sich beidseitig anschließenden Winkelabschnitten besteht, die die abgewinkelten Längsränder bilden, welche zum Verschweißen des Metallbandes aneinanderliegen.

Bei der Besäumungsvorrichtung handelt es sich insbesondere um ein Schneidwerkzeug mit einem rotierenden Messer bzw. einer rotierenden Schneidkante, das bzw. die an einer Außenfläche des Winkelabschnitts anliegt, um den Randabschnitt in Verlängerung des Winkelabschnitts abzutrennen. Die Außenflächen der Winkelabschnitte sind diejenigen Flächen der Winkelabschnitte, die einander abweisend angeordnet sind. Dagegen liegen sich die Innenflächen der Winkelabschnitte gegenüber. Bei dem Besäumungsvorgang wird das Metallband im Mittelabschnitt und im Winkelabschnitt von einem Gegenlager gestützt. Vorzugsweise handelt es sich bei diesem Gegenlager um eine Gegenrolle, deren Drehachse parallel zur Achse der rotierende Messer der Schneidrolle verläuft. Die Gegenrolle weist in ihren axialen Endbereichen eine Abstufung auf. Jede Abstufung stellt sich dabei als eine Durchmesserreduktion dar, wobei die Reduktion des Durchmessers gleich der Höhe des Winkelabschnitts des Metallbandes, d.h. gleich dem Versatz zwischen Mittelabschnitt und Randabschnitt des Metallbandes ist und die axiale Erstreckung des Versatzes gleich der Dicke des Metallbandes im Winkelabschnitt, d.h. gleich der Metallbanddicke gewählt ist.

Mit dem obigen Verfahren, nämlich mit der Erzeugung eines gestuften Metallbandes mit einem erhabenen bzw. vertieften Mittelabschnitt und demgegenüber versetzten Randabschnitten sowie der nachfolgenden Besäumung des Metallbandes durch Abtrennen der Randabschnitte ist es möglich, ein Metallband mit extrem kurzen abstehenden Längsrändern herzustellen. Die Verformung des Metallbandes kann kontinuierlich als Durchlaufprozeß oder diskontinuierlich und damit intermittierend erfolgen. Die Formgebung des Metallbandes kann auch durch einen Tiefziehvorgang geschehen.

Bei dem erfindungsgemäßen Verfahren ist grundsätzlich vorgesehen, das "Schweißvolumen" und die Schweißenergie in bestimmter Weise aufeinander abzustimmen. Es soll nämlich erreicht werden, daß durch das Verschweißen einerseits die abgewinkelten Längsränder miteinander verbunden werden und andererseits der sich durch die abgewinkelten Längsränder ergebende radiale Überstand "heruntergeschweißt" wird. Das Schweißvolumen wird bestimmt durch die Höhe der Längsränder und deren Dicke, d.h. durch die Dicke des Metallbandes. Die in die Schweißnaht eingebrachte Schweißenergie ist zum einen abhängig von der von der Schweißvorrichtung abgegebenen Energie und der Geschwindigkeit der Relativbewegung zwischen Schweißvorrichtung und Metallband. Es muß also die Schweißenergie pro Vorschub-Wegeinheit in Abhängigkeit von dem Schweißvolumen derart gewählt werden, daß nach dem Schweißvorgang die Längsränder bis zur Außenumfangsfläche des übrigen Metallbandes heruntergeschweißt sind, nach dem Verschweißen also trotz abgewinkelter Längsränder des Metallbandes kein nennenswerter Außenüberstand der Metallummantelung zu verzeichnen ist.

Mit Hilfe des erfindungsgemäßen Verfahrens wird es möglich, die Dicke des Metallbandes, das normalerweise aus Aluminium besteht, um etwa die Hälfte der Dicke der gegenwärtig für Kunststoff-Metall-Verbundrohre verwendeten Aluminium-Metallbänder zu reduzieren. Durch die hochstehenden Längsränder wird eine ausreichend große Anlagefläche erreicht, die auch dann noch ausreichend ist, wenn, was in der Praxis vorkommt, die Längsränder des Metallbandes über die Länge des Verbundrohres betrachtet, wellenförmige Radialversätze aufweisen. Die Längsränder des Metallbandes liefern einerseits ein ausreichend großes Volumen an Material zur Bildung einer nicht zu weit nach innen vorstehenden, aber dennoch ausreichend ausgeprägten Schweißnahtwurzel (nach innen weisender wulstartiger Vorsprung) mit lediglich geringen beidseitigen Einschneidungen zum jeweils angrenzenden Metallband und andererseits ein derart geringes Materialvolumen, daß nach dem Verschweißen kein nennenswerter radialer Überstand mehr zu verzeichnen ist. Es wird das gesamte Material der Längsränder bei der Verschweißung aufgeschmolzen und für die Ausbildung der Schweißlängsnaht und somit für eine Schaffung einer innigen Verbindung der lateralen Endbereiche des Mittelabschnittes des Metallbandes verwendet. Die abgewinkelten Längsränder haben darüber hinaus den Vorteil, das Metallband bis zur Verschweißung besser führen zu können.

Ein entscheidender Vorteil des erfindungsgemäßen Verfahrens ist darin zu sehen, daß durch die erfindungsgemäße Abstimmung von Schweißenergie und Schweißvolumen eine Schweißnaht erzeugt wird, die nennenswerte Vorwölbungen weder nach außen noch nach innen aufweist. Letzteres hat den Vorteil, daß das bereits gefertigte Innenrohr keine oder nur eine unerhebliche Querschnittsverformung im Bereich der Schweißnaht erfährt. Die lediglich geringe Vorwölbung nach außen hin beeinträchtigt in keiner Weise die Aufbringung der Kunststoffschicht für das Außenrohr, das damit ebenfalls im Querschnitt über 360° hinweg gleichmäßig ist.

Bei dem erfindungsgemäßen Verfahren kann auf eine mechanische Nachbearbeitung der Längsnaht des Metallbandes verzichtet werden. Dies gilt im übrigen auch für die Metallummantelung selbst auch; denn auch das um das Kunststoffrohr herumgelegte und verschweißte Metallband bedarf keinerlei Nachkalibrierung oder Durchmesserreduktion. Der Grund hierfür ist insbesondere darin zu sehen, daß wegen der abgewinkelten Längsränder das Metallband auch im Bereich der Schweißnaht dichter an dem Kunststoff-Innenrohr anliegen kann, als dies beispielsweise bei sich überlappenden Längsrändern oder auf Stoß liegenden Längsrändern der Fall ist, da die Schweißvorrichtung wegen der abstehenden Längsränder einen größeren Abstand zum Kunststoff-Innenrohr aufweisen kann. Damit sind die Hitzeeinwirkungen auf das Innenrohr beim Verschweißen der Längsränder des Metallbandes reduziert, weshalb das Metallband selbst auch im Nahtbereich recht dicht am Innenrohr anliegen kann. Durch die im Anschluß an die Verschweißung erfolgende Abkühlung des Metallbandes schrumpft dieses, womit sich die Formschlüssigkeit des Verbundes zwischen Kunststoffrohr und Metallband weiter verbessert.

Die Schweißenergie und das Schweißvolumen werden vorteilhafterweise derart eingestellt, daß die Schweißnaht an ihrer Außenseite eine zweckmäßigerweise geringe flache Vorwölbung aufweist, die über die (gedachte) Verlängerung der von dem Metallband-Mittelabschnitt gebildeten Außen-(Zylinder-)Fläche geringfügig übersteht (vorzugsweise bis etwa 1/10 bis 1/5 der Metallbanddicke). Die Schweißwurzel weist dabei vorzugsweise zwei Vorwölbungen auf, zwischen denen sich ein zurückgezogener Bereich befindet. Der zurückgezogene Bereich liegt an seiner tiefsten Stelle etwa in Verlängerung der Innenumfangsfläche des Metallband-Innenabschnitts. Die beiden seitlich davon angeordneten Vorwölbungen stehen etwa um 1/5 der Metallbanddicke nach innen über.

Alternativ werden die Schweißenergie und das Schweißvolumen derart aufeinander abgestimmt, daß sich an der Außenseite der Schweißnaht eine Abflachung einstellt und die Schweißwurzel eine der Abflachung gegenüberliegende Vorwölbung aufweist.

Wie oben erwähnt, sind die Längsränder des Metallbandes zu einer Seite hin abgewinkelt. Zwischen den beiden Längsrändern erstreckt sich der Mittelabschnitt des Metallbandes. Die Winkel, um die die beiden Längsränder des Metallbandes abgekantet sind, können unterschiedlich gewählt werden, wobei die Summe beider Winkel etwa 180° beträgt. Sind die beiden Winkel gleich, nämlich jeweils ca. 90°, so stehen die Längsränder bei um das Kunststoffrohr gelegtem Metallband radial ab.

Wie oben erwähnt ist es nach der Erfindung vorgesehen, die abstehenden Längsränder durch Formen eines glatten Metallbandes zu bilden. Zu diesem Zweck wird das Metallband vorzugsweise durch mindestens eine Formstation hindurchgeführt. Diese Formstation weist zwei um parallele Drehachsen drehbar gelagerte Formrollen auf, deren Umfangsflächen einander gegenüberliegen. In den Zwischenraum zwischen die Umfangs- bzw. Formflächen dieser beiden Formrollen wird nun das zu verformende Metallband eingeführt, so daß das vorher unverformte Metallband abgewinkelte Längsränder aufweist.

Die Verformung des Metallbandes kann entweder kontinuierlich im Durchlaufverfahren erfolgen (wozu insbesondere eine Formstation der obigen Art verwendet wird) oder aber diskontinuierlich erfolgen, indem Längenabschnitte des Metallbandes einem Formwerkzeug zugeführt und abschnittsweise verformt werden.

Das gemäß obigem Verfahren hergestellte ummantelte Kunststoff-Innenrohr kann als Zwischenstufe bei der Herstellung eines Kunststoff-Metall-Kunststoff-Verbundrohres dienen. Im Anschluß an die Ummantelung des Kunststoff-Innenrohres wird dann auf die Ummantelung eine weitere Kunststoffschicht aufgetragen, die das Kunststoff-Außenrohr bildet. Zwischen dem Kunststoff-Innenrohr und der Metallummantelung sowie zwischen der Metallummantelung und dem Kunststoff-Außenrohr können weitere Kunststoffschichten aufgetragen werden, bei denen es sich um Haftvermittlerschichten handelt. Wegen der bereits nach dem Verschweißen ohne mechanische Nachbehandlung erfolgenden Abflachung der Schweißnaht, deren Außenkontur sich in etwa der Umfangsfläche des Metallbandes in dessen Mittelabschnitt angenähert ist, ist das nachfolgende Auftragen sowohl von der Haftvermittlung als auch der Herstellung des Außenrohres dienenden Kunststoffschichten problemlos möglich, wobei stets geschlossene Schichten entstehen, ohne daß dazu übermäßig viel Kunststoffmaterial im Längsnahtbereich aufgetragen werden muß. Die Außenschichten können also durchaus recht dünn ausgebildet sein, wobei diese Schichten auch noch im Bereich der Längsnaht eine ausreichende Stärke, d.h. Dicke aufweisen.

Nachfolgend wird anhand der Figuren ein Ausführungsbeispiel der Erfindung näher erläutert. Im einzelnen zeigen:
- Fig. 1: eine Seitenansicht einer Anlage zur Herstellung eines Mehrschichtverbundrohres,
- Fig. 2: eine Seitenansicht der Formungs- und Besäumungsvorrichtung für das zur Herstellung des Mehrschichtverbundrohres gemäß Fig. 1 erforderliche Metallband,
- Fign. 3 bis 5: Querschnittsansichten des Metallbandes in Höhe der Ebenen III-III, IV-IV und V-V der Fig. 2,
- Fign. 6 bis 8: Querschnittsansichten des Innenrohres in Höhe der Ebenen VI-VI, VII-VII und VIII-VIII der Fig. 1 mit dem um dieses angeordneten bzw. an diesem eng anliegenden Metallband, wobei in Fig. 7 auch die Formwerkzeuge zum Halten des Metallbandes unter Anlage der abstehenden Längsränder in der Schweißstation dargestellt sind,
- Fig. 9: eine vergrößerte Darstellung der Schweißnaht entsprechend dem bei IX eingekreisten Bereich der Fig. 8, wobei die Wurzelbildung der Schweißnaht und die flache Vorwölbung an der Außenseite zu erkennen ist, und
- Fign. 10 und 11: Querschnitte durch ein Formrollenpaar und ein Besäumungsrollenpaar der Formungs- und Besäumungsvorrichtung entlang der Ebenen X-X und XI-XI der Fig. 2.

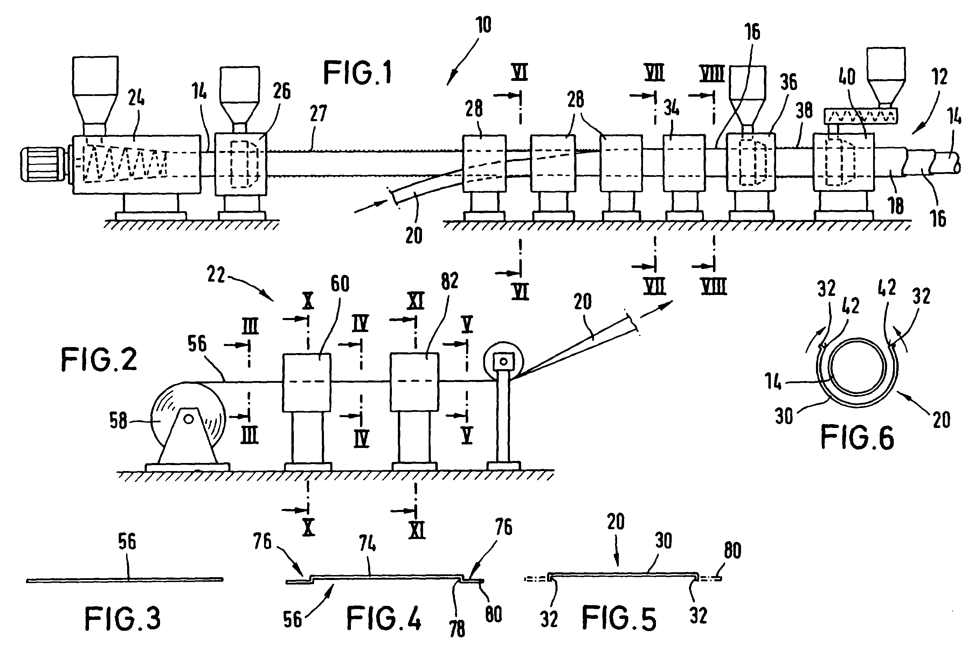

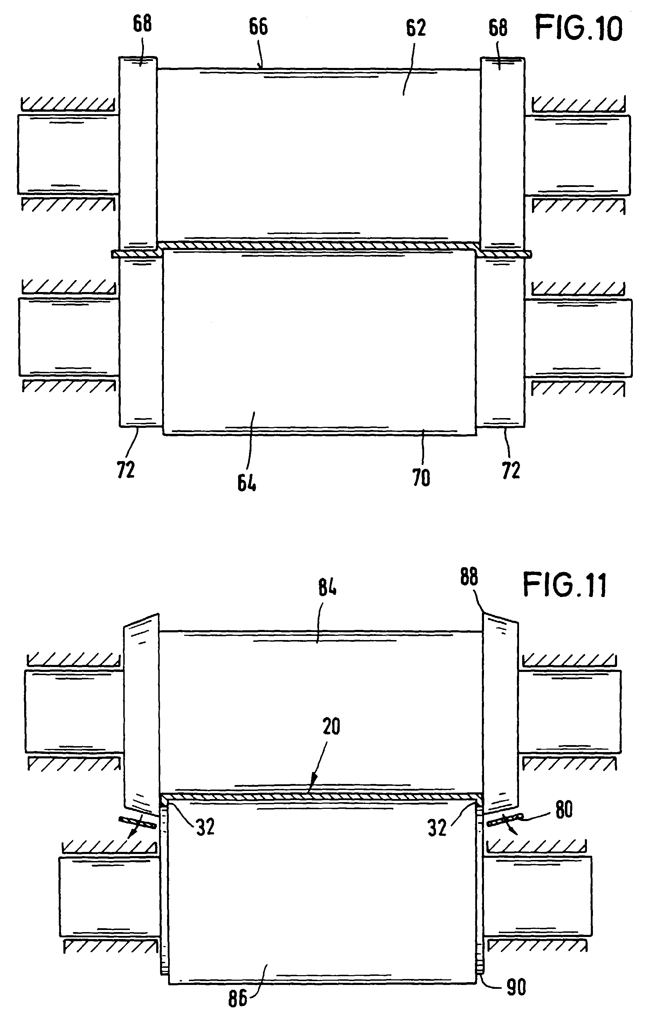

In Fig. 1 ist stark schematisiert eine Anlage 10 zur Herstellung eines Mehrschichtverbundrohres 12 dargestellt, welches ein Kunststoff-Innenrohr 14, eine Metallummantelung 16 für das Kunststoff-Innenrohr 14 und ein außen auf der Metallummantelung 16 aufgebrachtes Außenkunststoffrohr 18 aufweist. Für die Metallummantelung 16 wird ein Metallband 20 verwendet, das in einer Formungs- und Besäumungsvorrichtung 22 mit abstehenden Längsrändern versehen wird. Diese Formungs- und Besäumungsvorrichtung 22 ist, ebenfalls stark schematisiert, in Seitenansicht in Fig. 2 dargestellt. Nähere Einzelheiten zu den einzelnen Stationen der Vorrichtung 22 sind in den Fign. 10 und 11 zu erkennen, auf die später noch eingegangen werden wird.

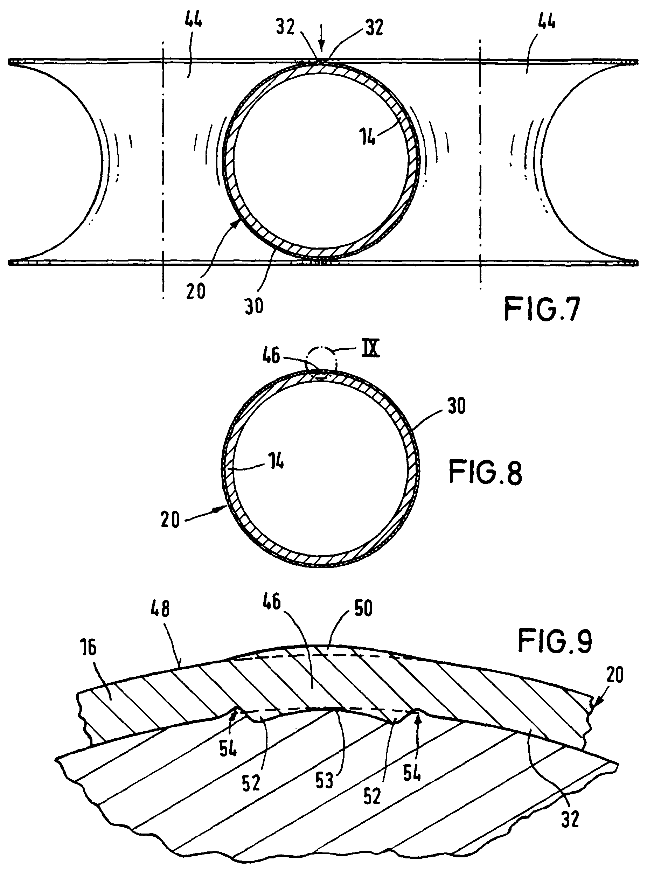

Bei der Anlage 10 wird in an sich bekannter Weise zur Herstellung des Verbundrohres 12 wie folgt verfahren. Zunächst wird mittels eines Extruders 24 das Kunststoff-Innenrohr 14 extrudiert. Auf dieses Innenrohr 14 wird mittels eines weiteren Extruders 26 von außen eine Kunststoffschicht als Haftvermittler 27 aufgetragen. Von der Seite, von unten oder von oben wird hinter dem Extruder 26 ein (Aluminium-)Metallband 20 zugeführt, das mittels Rollenformstationen 28 von außen um das Innenrohr 14 herumgelegt wird. Die Geschwindigkeit, mit der das Metallband 20 zugeführt wird, ist synchron zur Geschwindigkeit gewählt, mit der das Innenrohr 14 extrudiert wird. Wie anhand von Fig. 6 zu erkennen ist, weist das Metallband 20 einen Mittelabschnitt 30 auf, an dessen beiden Längsseiten abstehende Längsränder 32 angeordnet sind. Mittels der Rollenformstationen 28 wird dieses Metallband 20 in Anlage mit dem Innenrohr 14 gebracht und derart um dieses herumgelegt, daß die etwa 90° abstehenden Längsränder 32 in Anlage miteinander gebracht werden. Die derart aneinanderliegenden Längsränder 32 stehen im wesentlichen radial vom Innenrohr 14 ab und werden in einer Schweißstation 34 miteinander verschweißt. Auf diese Verschweißung wird weiter unten noch unter Bezugnahme auf die Fign. 7 bis 9 näher eingegangen. Im Anschluß an die Längsnahtverschweißung (die einander berührenden Längsränder 32 des Metallbandes 20 verlaufen in axialer Erstreckung des Innenrohres 14 bzw. des Verbundrohres 12) wird von außen auf die Metallummantelung 16 mittels eines Extruders 36 eine weitere Kunststoffschicht als Haftvermittler 38 aufgebracht. Mit Hilfe eines weiteren Extruders 40 wird dann auf die Haftvermittlerschicht 38 die Kunststoffschicht für das Kunststoff-Außenrohr 18 aufextrudiert. Durch an sich bekannte Maßnahmen werden die Haftvermittlerschichten 27 und 38 aktiviert bzw. die Kunststoffschichten für die Außen- und Innenrohre 18,14 vernetzt. Hierauf soll an dieser Stelle nicht näher eingegangen werden.

Wie bereits oben ausgeführt, wird das Metallband 20 derart um das Innenrohr 14 herumgelegt, daß es in seinem Mittelabschnitt 30 vollflächig an der Außenfläche des Innenrohres 14 bzw. an der Haftvermittlerschicht 27 anliegt und sich die in diesem Zustand einander gegenüberliegenden Innenflächen 42 (Fig. 6) der Längsränder 32, die bei geradlinig gestrecktem Metallband 20 die Außenflächen bilden, berühren. Durch entsprechende Form- bzw. Formhalterollen 44 wird das Metallband 20 in diesem Zustand während der Verschweißung der Längsränder 32 gehalten. Die von der Schweißstation 34 abgegebene Schweißenergie pro Vorschubwegeinheit sowie die durch die Längsränder zur Verfügung gestellte schweißbare Materialmenge (Schweißvolumen) sind derart gewählt, daß der vor der Verschweißung bestehende radiale Überstand der Längsränder 32 nach der Verschweißung nicht mehr gegeben ist, die Außenkontur der Schweißnaht 46 also der Außenkontur der Metallummantelung 16 im übrigen Bereich des Metallbandes 20 angenähert ist. Einen Querschnitt durch die Schweißnaht 46 in vergrößertem Maßstab zeigt Fig. 9. Hier ist zu erkennen, daß die Schweißnaht 46 an ihrer Außenseite eine leichte Vorwölbung 50 aufweist und sich dabei im wesentlichen in die Außenumfangsfläche 48 der Metallummantelung 16 bzw. des Metallbandes 20 einfügt. In Fig. 9 ist die Umfangsfläche 48 im Bereich der Vorwölbung 50 der Schweißnaht 46 gestrichelt ergänzt. Auf der Innenseite der Schweißnaht 46 ist die Wurzel zu erkennen, die zwei Innenvorwölbungen 52 zu beiden Lateralseiten der Schweißnaht und eine dazwischenliegende Vertiefung 53 aufweist. Der Übergang der Innenvorwölbungen 52 der Wurzel zum Mittelabschnitt 32 des Metallbandes 20 ist mit leichten Einkerbungen 54 versehen, deren Tiefe wie die Innenvorwölbungen 52 und die Vertiefung 53 durch das schweißvolumen und die Schweißenergie bestimmt ist. Durch Wahl der Schweißenergie und Wahl des Schweißvolumens (Höhe der Längsränder 32 und Dicke des Metallbandes 20) läßt sich also das Metallband 20 derart an seinen Längsrändern 32 verschweißen, daß die Schweißnaht 46 eine der Außenkontur der Metallummantelung 16 angepaßte Außenkontur bei ausreichend ausgeprägter Wurzelbildung mit mechanisch zuverlässigem Übergang zum Metallband 20 aufweist, wobei keinerlei mechanische Nachbearbeitungen weder der Schweißnaht 46 noch der Metallummantelung 16 selbst erforderlich sind. Dies wirkt sich ganz entscheidend auf eine Reduktion der Produktionskosten aus, da einerseits Verfahrensschritte bzw. Behandlungsschritte eingespart werden können und andererseits wegen der Möglichkeit, die Metallummantelung zuverlässig zu verschweißen, dünnere Metallbänder eingesetzt werden können.

Nachfolgend soll anhand der Fign. 2 bis 5 und Fig. 10 sowie Fig. 11 auf das Verfahren zur Herstellung eines Metallbandes mit abgewinkelten Längsrändern eingegangen werden. Dieses Metallband 20 wird ausgehend von einem flachen ebenen breiteren Metallband 56 geformt, das auf einem Wickel 58 aufgewickelt ist (s. Fig. 2). In einer Rollenformstation 60 wird dem Metallband 56 das im Querschnitt in Fig. 4 dargestellte Profil verliehen. Die Rollenformstation 60 weist zwei Formrollen 62,64 auf, die beidseitig (also von der Oberseite und der Unterseite) an dem Metallband 56 anliegen und zueinander komplementäre Umfangsflächen aufweisen. Durch Einführen des Metallbandes 56 in den Zwischenraum zwischen die beiden um parallele Achsen drehbar gelagerten Formrollen 62,64 wird das Metallband 56 gedrückt und damit geformt, so daß es einen Querschnitt gemäß Fig. 4 erhält. Während die Formrolle 62 eine sich nahezu über die gesamte axiale Länge erstreckende Vertiefung 66 mit stufenförmigen Erhöhungen 68 an den axialen Enden aufweist, ist die Umfangsfläche der Formrolle 64 mit einer Umfangserhöhung 70 und abgestuften sowie im Durchmesser reduzierten axialen Enden 72 versehen. Charakteristisch für das Profil bzw. den Querschnitt des Metallbandes 56 ist der ebene Mittelabschnitt 74, an den sich beidseitig L-förmige Flansche 76 an den Längsseiten des Metallbandes 56 anschließen. Jeder L-förmige Flansch 76 weist einen ersten kurzen Schenkel 78 auf, der mit dem Mittelabschnitt 74 verbunden ist und von diesem im wesentlichen rechtwinklig absteht. An diesen kurzen Schenkel 78 (auch Winkelabschnitt genannt) schließt sich ein zweiter längerer Schenkel 80 (nachfolgend auch Randabschnitt genannt) an, der sich parallel zum Mittelabschnitt 74 erstreckt und um die Länge des Winkelabschnitts 78 höhenversetzt zum Mittelabschnitt 74 ist.

Das derart durch Drücken geformte Metallband 56 wird einer Besäumungsstation 82 zugeführt, die zwei beidseitig des Metallbandes 56 anliegende Rollen 84,86 aufweist. Die Rolle 84, die - in der Darstellung gemäß Fig. 4 - von oben an dem Metallband 56 anliegt, weist zu beiden Seiten der Winkelabschnitte 78 angeordnete radial abstehende und umlaufende Schneidkanten 88 auf, die zum Abtrennen der Randabschnitte 80 der L-förmigen Flansche 76 dienen. Während die obere (Besäumungs-)Rolle 84 eine zurückspringende mittlere Umfangsfläche und beidseitig von dieser angrenzend die abstehenden Schneidkanten 88 aufweist, ist die untere Rolle 86 (Gegenrolle) an ihren axialen Enden mit einer Abstufung 90 versehen. Die Bemessung der Abstufung 90 ist so gewählt, daß die Rolle 86 an den Winkelabschnitten 78 anliegt und zusätzlich am längeren Schenkel 80 des L-förmigen Flansches 76 um die Dicke des Metallbandes anliegt. Damit bildet die sich aus der Abstufung ergebende Fläche und die übrige Umfangsfläche der Rolle 86 im Bereich der Winkelabschnitte 78 eine Gegenfläche zum Stützen des Metallbandes 56 beim Besäumungsvorgang. Das Profil des beschnittenen Metallbandes 56 ist in Fig. 5 dargestellt, wobei die abgetrennten Randabschnitte 80 gestrichelt dargestellt sind. Dieses Profil des Metallbandes entspricht dem bereits oben beschriebenen Metallband 20, das dann im Falle dieses Ausführungsbeispieles von unten an das Kunststoff-Innenrohr 14 herangeführt und um dieses gelegt wird, was bereits oben beschrieben ist.

## Patentansprüche

1. Verfahren zum Ummanteln eines Kunststoffrohres mit einer Metallummantelung, bei dem
- um ein Kunststoffrohr (14) herum ein Metallband (20) gelegt wird, wobei das Metallband (20) zu einer gemeinsamen Seite abgewinkelte Längsränder (32) aufweist, die bei um das Kunststoffrohr (14) herumgelegtem Metallband (20) im wesentlichen parallel zur Längsachse des Kunststoffrohres (14) verlaufend aneinanderliegen und miteinander verschweißt werden,
- wobei das Volumen der abgewinkelten Längsränder (32) und die Schweißenergie derart gewählt werden, daß das Längsnaht-verschweißte Metallband (20) nach dem Verschweißen im Bereich der Längsnaht (46) eine im wesentlichen in der Außenumfangsfläche (48) der Metallummantelung (16) liegende Außenfläche (50) aufweist,
**dadurch gekennzeichnet**,
- daß das mit den abstehenden Längsrändern (32) versehene Metallband (20) durch Formen von L-förmigen Flanschen (76) an den Längsseiten eines Ausgangsmetallbandes (56) gebildet wird, wobei an jeder Längsseite von einem Mittelabschnitt (74) des Ausgangsmetallbandes (56) ein erster Schenkel (78) des L-förmigen Flansches (76) absteht, von dem aus sich ein parallel zum Mittelabschnitt verlaufender zweiter Schenkel (80) des L-förmigen Flansches (76) erstreckt, und
- daß nach der Verformung der Längsseiten des Ausgangsmetallbandes (56) die zweiten Schenkel (80) von den ersten Schenkeln (78) abgetrennt werden, so daß die ersten Schenkel (78) die Längsränder (32) des verbleibenden Metallbandes (20) bilden.

2. Verfahren nach Anspruch 1, dadurch gekennzeichnet, daß das Ausgangsmetallband (56) zum Formen der L-förmigen Flansche (76) an seinen Längsseiten in den Zwischenraum zwischen die Umfangsflächen (66, 68,70,72) zweier Formrollen (62,64) mindestens eines Rollenpaares geführt wird, wobei die Formrollen (62,64) komplementäre Umfangs-Formflächen zur beidseitigen Anlage an dem Ausgangsmetallband (56) aufweisen.

3. Verfahren nach Anspruch 2, dadurch gekennzeichnet, daß die eine Formrolle (64) eine umlaufende Mittenerhöhung und die andere Formrolle (62) eine umlaufende Mittenvertiefung in der Umfangsformfläche aufweist.

4. Verfahren nach einem der Ansprüche 1 bis 3, dadurch gekennzeichnet, daß die Abtrennung eines zweiten Schenkels (80) eines L-förmigen Flansches (76) des Ausgangsmetallbandes (56) durch ein Besäumungsrollenpaar mit einer Schneidrolle (84) und einer Gegenrolle (86) erfolgt, wobei die Schneidrolle (84) am Mittelabschnitt (74) und an einem ersten Schenkel (78) eines L-förmigen Flansches (76) des Ausgangsmetallbandes (56) anliegt und die Gegenrolle (86) an dem Mittelabschnitt (74), einem ersten Schenkel (78) eines L-förmigen Flansches (76) und über die Dicke des Ausgangsmetallbandes (56) an einem zweiten Schenkel (80) eines L-förmigen Flansches (76) anliegt.

5. Verfahren nach einem der Ansprüche 1 bis 4, dadurch gekennzeichnet, daß die Summe der Winkel, die die beiden Längsränder (32) des Metallbandes (20) mit dem dazwischenliegenden Mittelabschnitt (30) bilden, ca. 180° beträgt.

6. Verfahren nach einem der Ansprüche 1 bis 5, dadurch gekennzeichnet, daß die Längsränder (32) des Metallbandes (20) um jeweils ca. 90° abgewinkelt sind.

7. Verfahren nach einem der Ansprüche 1 bis 6, dadurch gekennzeichnet, daß die Außenfläche (50) der Längsnaht (46) nach der Verschweißung leicht vorgewölbt ist.

8. Verfahren nach einem der Ansprüche 1 bis 7, dadurch gekennzeichnet, daß die Längsnaht (46) an der Innenseite zwei Vorwölbungen (52) aufweist, zwischen denen sich ein Vertiefung (53) befindet.

## Claims

1. A method for sheathing a plastic tube with a metal sheathing, wherein
- a metallic band (20) is laid around a plastic tube (14), the metallic band (20) comprising longitudinal edges (32) bent to a common side, said longitudinal edges abutting each other and extending substantially parallel to the longitudinal axis of the plastic tube (14) when the metallic band (20) is laid around the plastic tube (14), and being welded together,
- the volume of the bent longitudinal edges (32) and the welding energy being chosen such that, after welding, the metallic band (20) welded together at its longitudinal edges comprises, in the region of the longitudinal seam (46), an outer surface (50) being located substantially in the outer peripheral surface (48) of the metal sheathing (16),
**characterized in**
- that the metallic band (20) provided with the projecting longitudinal edges (32) is formed by molding L-shaped flanges (76) on the longitudinal sides of an initial metallic band (56), a first leg (78) of the L-shaped flange (76) projecting from a middle section (74) of the initial metallic band (56) on each longitudinal side, a second leg (80) of the L-shaped flange (76) extending from said first leg in parallel to the middle section, and
- that the second legs (80) are separated from the first legs (78) after the deformation of the longitudinal sides of the initial metallic band (56), so that the first legs (78) are the longitudinal edges (32) of the remaining metallic band (20).

2. The method according to claim 1, characterized in that the initial metallic band (56) is guided into the clearance between the peripheral surfaces (66,68,70,72) of two molding rolls (62,64) of at least one pair of rolls in order to mold the L-shaped flanges (76) on its longitudinal sides, the molding rolls (62,64) comprising complementary peripheral molding surfaces for engaging the initial metallic band (56) on both sides.

3. The method according to claim 2, characterized in that the one molding roll (64) has a circumferential raised central part and the other molding roll (62) a circumferential central deepening in their respective peripheral molding surfaces.

4. The method according to any one of claims 1 to 3, characterized in that the separation of a second leg (80) of an L-shaped flange (76) of the initial metallic band (56) is effected by a pair of trimming rolls comprising a cutting roll (84) and a counter roll (86), the cutting roll (84) engaging on a middle section (74) and on a first leg (78) of an L-shaped flange (76) of the initial metallic band (56) and the counter roll (86) engaging on the middle section (74), a first leg (78) of an L-shaped flange (76) and, across the thickness of the initial metallic band (56), on a second leg (80) of an L-shaped flange (76).

5. The method according to any one of claims 1 to 4, characterized in that the sum of the angles formed by the two longitudinal edges (32) of the metallic band (20) with the intermediate middle section (30) is about 180°.

6. The method according to any one of claim 1 to 5, characterized in that the longitudinal edges (32) of the metallic band (20) are angled by about 90° each.

7. The method according to any one of claims 1 to 6, characterized in that the outer surface (50) of the longitudinal seam (46) slightly protrudes after welding.

8. The method according to any one of claims 1 to 7, characterized in that the longitudinal seam (46) comprises two protrusions (52) on its inside with a deepening (53) arranged therebetween.

## Revendications

1. Procédé pour munir un tuyau en matière plastique d'une gaine métallique, dans lequel
- autour d'un tuyau en plastique (14) est posée une bande métallique (20), la bande métallique (20) présentant des bords longitudinaux (32) coudés vers un côté commun, qui lorsque la bande métallique (20) est passée autour du tuyau en plastique (14), sont placés en appui les uns sur les autres, en s'étendant sensiblement parallèlement à l'axe longitudinal du tuyau en plastique (14), et soudés ensemble,
- le volume des bords longitudinaux (32) coudés et l'énergie de soudage étant choisis de manière que la bande métallique (20) soudée par un cordon longitudinal présente, après le soudage, dans la zone du cordon longitudinal (46) une surface extérieure (50) située sensiblement dans la surface périphérique extérieure (48) de l'enveloppe métallique (16),
caractérisé en ce que
- la bande métallique (20) dotée des bords longitudinaux (32) en saillie est constituée par formage de rebords (76) en forme de L, sur les côtés longitudinaux d'une bande métallique initiale (56), une première branche (78) du rebord en forme de L (76) faisant saillie d'un tronçon médian (74) de la bande métallique initiale (56), sur chaque côté longitudinal, depuis laquelle s'étend une deuxième branche (80), s'étendant parallèlement au tronçon médian, du rebord en forme de L (76), et
- en ce que, après déformation des côtés longitudinaux de la bande métallique initiale (56), les deuxièmes branches (30) sont séparées des premières branches (78), de manière que les premières branches (78) constituent les bords longitudinaux (32) de la bande métallique (20) subsistante.

2. Procédé selon la revendication 1, caractérisé en ce que la bande métallique initiale (56) est guidée, pour le formage des rebords (76) en forme de L, sur ses côtés longitudinaux, dans l'espace intermédiaire existant entre les faces périphériques (66, 68, 70, 72) de deux rouleaux de formage (62, 64) d'au moins une paire de rouleaux, les rouleaux de formage (62, 64) présentant des faces de formage périphériques complémentaires pour un appui sur les deux côtés sur la bande métallique initiale (56).

3. Procédé selon la revendication 2, caractérisé en ce qu'un premier rouleau de formage (64) présente une élévation centrale de pourtour et l'autre rouleau de formage (62) présente un creusement central de pourtour dans la face de formage périphérique.

4. Procédé selon l'une des revendications 1 à 3, caractérisé en ce que la séparation d'une deuxième branche (80) d'un rebord (76) en forme de L de la bande métallique initiale (56) s'effectue au moyen d'une paire de rouleaux de rognage, avec un rouleau de découpage (84) et un contre-rouleau (86), le rouleau de découpage (84) appuyant sur le tronçon médian (74) et sur une première branche (78) d'un rebord en forme de L (76) de la bande métallique initiale (56), et le contre-rouleau (86) appuyant sur le tronçon médian (74), une première branche (78) d'un rebord en forme de L (76) et, sur l'épaisseur de la bande métallique initiale (56), sur une deuxième branche (80) d'un rebord en forme de L (76).

5. Procédé selon l'une des revendications 1 à 4, caractérisé en ce que la somme des angles que les deux bords longitudinaux (32) de la bande métallique (20) font avec le tronçon médian (30) intermédiaire est d'environ 180°.

6. Procédé selon l'une des revendications 1 à 5, caractérisé en ce que les bords longitudinaux (32) de la bande métallique (20) sont coudés chaque fois d'environ 90°.

7. Procédé selon l'une des revendications 1 à 6, caractérisé en ce que la surface extérieure (50) du cordon longitudinal (46) est légèrement bombée et en saillie après le soudage.

8. Procédé selon l'une quelconque des revendications 1 à 7, caractérisé en ce que le cordon longitudinal (46) présente sur la face intérieure deux bombements en saillie (52) entre lesquelles se trouve un creusement (53).
